# EUROPEAN PATENT SPECIFICATION

(11) **EP 1 205 385 B1**
(45) Date of publication and mention of the grant of the patent: **24.05.2006**
(21) Application number: 01500237.1
(22) Date of filing: 26.09.2001
(51) Int. Cl.: B65B 51/30, B65B 9/06

(54) **Packaging machine with a system for the adjustment of sealing jaws**
System in einer Verpackungsmaschine zur Einstellung der Siegelbacken
Système dans une machine d' emballage pour le réglage des mâchoires de scellage

(30) Priority: 13.11.2000 ES 200002716
(43) Date of publication of application: 15.05.2002
(73) Proprietor: Rochman,S.Coop., 48210 Otxandio (Bizkaia) (ES)
(72) Inventor: Erdoiza Ibarluzea, Eneko, 48240 Berriz (Bizkaia) (ES); Ruiz de Eguino Lopez, Juan Maria, 20570 Bergara (Gipuzkoa) (ES)
(74) Representative: Fernandez Guzman, Juan

(56) References cited:
- EP-A- 0 139 621
- DE-A- 4 206 968
- US-A- 5 904 027
- US-A- 6 050 065

## Description

The present invention relates to a machine for the continuous packaging of articles in individual plastic bags by means of the joining of the ends of the bags together by welding between two to-and-fro moving tool jaws, and subsequent cutting off, the gap between these jaws being adjustable.

### Prior Art

US 4553377 discloses a machine for the continuous packaging of articles of varying thickness in plastic bags, starting from a tube that is sealed on either side of the article by means of a joint welded by two tool jaws that execute a reciprocating stroke during the sealing process. The plastic tube and the articles inside pass between the two jaws on a conveyor belt. The sealing jaws are integral with and supported on a jaw-carrier plate and each of them is connected to a rack arranged vertically and moved up and down by a stationary horizontal pinion. Both racks are engaged on opposite sides of the pinion, whose rotation is governed by a machine control unit. Depending on the thickness or height of the article to be packaged, the gap between the two jaws is set by means of an adjusting device associated with the upper jaw, which is moved along its rack by varying its height in relation to the lower jaw as required.

### Disclosure of the invention

The object of the invention is a machine for the continuous packaging of articles in plastic bags, starting from a plastic tube, by means of two tool jaws which seal each bag by means of a weld on either side of the article, and provided with a system for adjusting the height of the jaws, as defined in claim 1.

The packaging machine according to the invention comprises two jaws, an upper and a lower one, supported by a jaw-carrier plate attached rigidly to its respective rack engaged in a stationary pinion, which move the jaws vertically in both directions. The jaws are set between them at a maximum opening and closing distance. The pinion is driven by a gear motor for the travel of each jaw in opposing directions. The system for setting the maximum distance between the jaws adjusts jaw height as required, depending on the thickness of the articles, and the adjusting process is carried out by a control unit on the machine governing pinion turn, in order to effect a predetermined linear movement of the rack of the upper jaw only, in either direction, while the lower jaw remains disengaged at an invariable height. The packaging machine comprises a second motor to move the pinion horizontally until it disengages the rack from the lower pinion.

### Description of the drawings

FIG. 1 is a partial elevational view of an embodiment of the packaging machine according to the invention.
FIG. 2 is a profile view of the packaging machine of figure 1, showing the system for adjusting the height of one jaw.
FIG. 3 is a close view of the adjusting system of figure 2.

### Description of the preferred embodiment

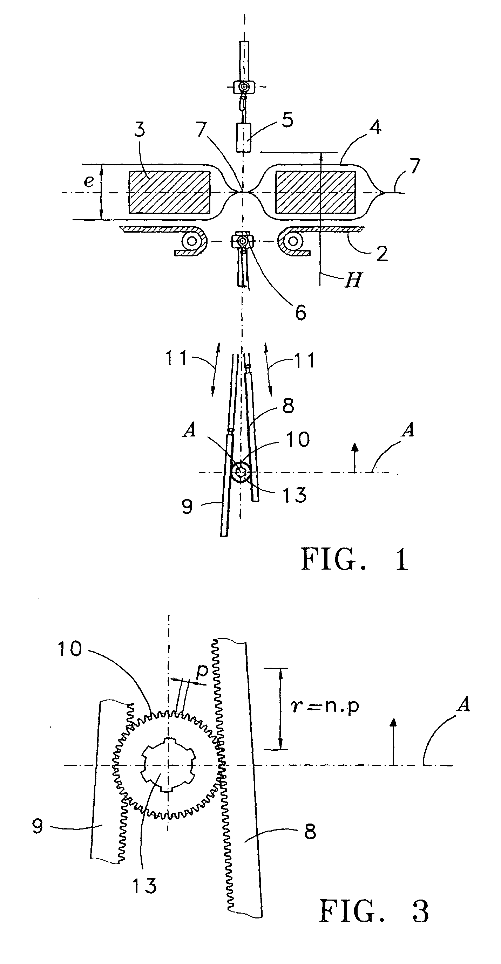

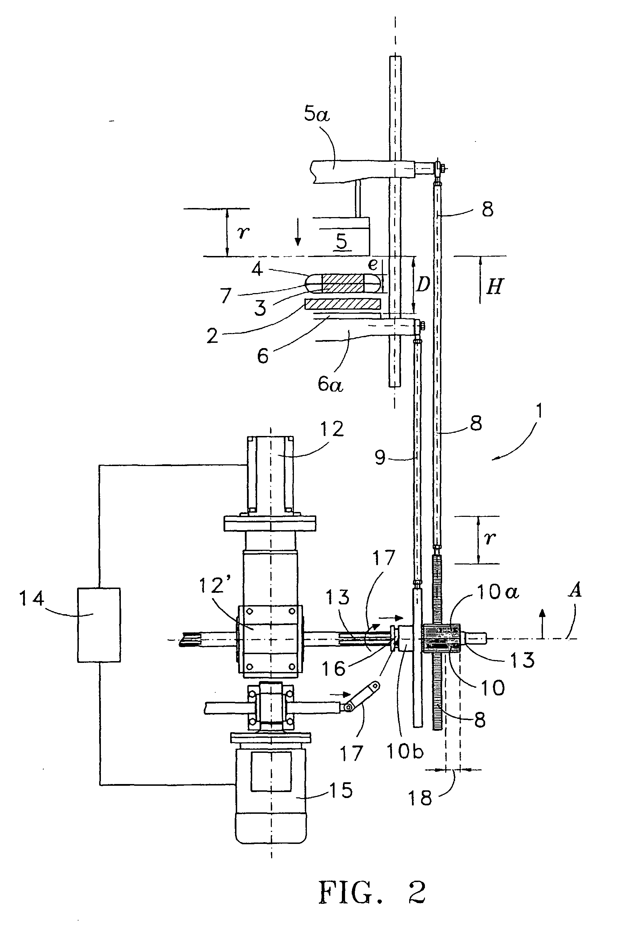

With reference to figures 1 to 3, a packaging machine embodiment in accordance with the invention comprises a belt 2 for conveying the articles 3 for packaging arranged in a plastic tube, on which on either side of each article two jaws 5, 6, upper and lower, effect a welded seal 7 by means of a reciprocating movement 11. The thickness "e" of the articles or height above the conveyor belt determines the maximum opening distance "D" between the jaws. The jaws 5, 6 are integral with and supported by a respective jaw-carrier plate 5a, 6a, which are rigidly attached to two racks 8, 9 engaged on opposite sides of a stationary drive pinion 10.

The jaws 5, 6 are adjusted to a predetermined maximum opening and minimum closing distance "D" during the sealing operation of a series of articles 3. The drive pinion 10 of both racks 8, 9 is arranged with its axis "A" horizontal and situated at a zero reference height for the jaws 5, 6 in their to-and-fro movement 11. The pinion is driven by a gear motor 12, 12' for the movement of each jaw 5, 6 in an opposing direction and turns alternately in both directions an angular measurement corresponding to these maximum "D" and minimum inter-jaw distances. The drive pinion 10 is mounted on a long splined shaft coupled to the gear motor, in such a way that it may be moved along the splined shaft 13 (fig. 3).

When a change of run of articles 3 of different thickness "e" takes place, the height "H" of the upper jaw 5 is set previously to attain the new maximum separation distance "D" between the jaws, adjusted to the welding of the two sides 4a, 4b of the plastic tube 4. The machine control unit 14 governs the turning of pinion 10 so that the latter executes (fig. 3) a turn 17 of a number "n" of teeth of pitch "p", whose sum "n.p." is equivalent to a linear stroke "r" of the upper rack 8 in either direction to attain the required relative height "H". The rack 9 operating the lower jaw 6 is disengaged beforehand so that it will remain at an invariable height "H" during the adjusting process.

To disengage the rack 9 from the lower jaw 6, besides the control unit 14, the packaging machine 1 also comprises a second disengagement motor 16 to move the pinion 10 horizontally on a splined shaft 13 a sufficient length 18 for it to be disengaged from the rack 9, whereas the upper jaw rack 8 remains engaged. For this purpose the pinion 10 has a part 10a of its length toothed, on which the rack 8 of the upper jaw 5 remains engaged, and an non-toothed part 10b, which is matched up with the lower jaw rack 9 to disengage it. At its free end the non-toothed section of the pinion 10b has a slot 16, at which an articulated arm is coupled that is pulled by a second motor 15 so as to displace the pinion 10 axially.

## Claims

1. Machine for the continuous packaging of articles in plastic bags (4) on a horizontal conveyor belt (2), which uses two weld-sealing jaws, an upper (5) and a lower (6) one, on either side of each plastic bag, wherein the jaws (5, 6), supported by a respective jaw-carrier plate (5a, 6a) are displaced by two racks (8, 9) positioned vertically and engaged on opposite sides of a drive pinion (10) arranged with its shaft (A) horizontally, which is turned by a gear motor (12, 12') producing a vertical reciprocating movement (11) of both racks (8, 9), so that the jaws (5, 6) attain a maximum opening distance (D) between them, the machine (1) being provided with means (10, 12, 12', 13, 14, 15) for adjusting the relative height (H) of one jaw (5) so as to set the maximum opening distance (D) depending on the thickness (e) of the articles to be packaged, **characterised in that**, both jaw-carriers (5a, 6a) are integral with their rack (8, 9), the means (10, 12, 12', 13, 14, 15) for adjusting said relative height (H) of a jaw (5) comprise a mechanism (10b, 13, 15, 17) for disengaging one of the two racks (9), and **in that** said gear motor (12, 12') is governed by a control unit (14) and designed to automatically perform a restricted turn (17) of the pinion (10) by moving the engaged adjusting rack (8) a vertical stroke (r) equal to the variation in a desired jaw relative height (H).

2. The packaging machine of claim 1, **characterised in that** the pinion (10) is mounted on a splined drive shaft (13), on which it slides axially, and the disengagement mechanism (10b, 13, 15) comprises a pinion with a longitudinal non-toothed part (10b), and a motor (15) coupled to the pinion (10) for its axial movement on the splined shaft (13) until it positions a rack (6) on said non-toothed part.

## Patentansprüche

1. Maschine zur kontinuierlichen Verpackung von Gegenständen in Plastikbeuteln (4) auf einem horizontalen Transportband (2), das zum Verschliessen der beiden Seiten der einzelnen Plastikbeutel (4) zwei Siegelbacken einsetzt, eine obere (5) und eine untere (6), wobei die Siegelbacken (5, 6) jeweils von einer Platte (5a, 6a) getragen und von zwei Zahnstangen (8, 9) angetrieben werden, die vertikal angeordnet sind und an gegenüberliegenden Seiten eines Antriebsritzels (10) eingreifen, das mit seiner Achse (A) horizontal montiert und von einem Getriebemotor (12) gedreht wird, um eine vertikale Hin- und Herbewegung (11) der beiden Zahnstangen (8, 9) zu bewirken, während die Siegelbacken (5, 6) einen maximalen Öffnungsabstand (D) erreichen und die Maschine (1) mit Mitteln (10, 12, 12', 13, 14, 15) zur Einstellung der relativen Höhe (H) der einen Siegelbacke (5) ausgestattet ist, um den maximalen Öffnungsabstand (D) in Abhängigkeit von der Stärke (e) der zu verpackenden Gegenstände (3) abzugleichen, **dadurch gekennzeichnet, dass** die beiden Backenplatten (5a, 6a) fest mit ihrer Zahnstange (8, 9) verbunden sind und die Mittel (10, 12, 12', 13, 14, 15) zur Einstellung der relativen Höhe (H) der einen Siegelbacke (5) einen Mechanismus (10b, 13, 15, 17) zur Lösung der einen der beiden Zahnstangen (9) umfassen, während der Getriebemotor (12, 12') von einer Kontrolleinheit (14) gesteuert und so ausgelegt wird, dass er automatisch eine beschränkte Drehbewegung (17) des Ritzels (10) bewirkt und die im Eingriff stehende Einstellzahnstange (8) vertikal in einer Strecke (r) verschiebt, die der gewünschten Höhenverstellung (H) der Siegelbacke (5) entspricht.

2. Verpackungsmaschine nach Anspruch 1, **dadurch gekennzeichnet, dass** das Ritzel (10) auf einer axial verschiebbaren gerippten Antriebsachse (13) angeordnet ist und dass der Mechanismus (10b, 13, 15) zur Lösung des Eingriffs ein Ritzel mit einem länglichen, nicht gezahnten Bereich (10b) und einen Motor (15) umfasst, der mit dem Ritzel (10) verbunden ist, um es auf der gerippten Achse (13) axial zu verschieben, bis sich eine Zahnstange (6) auf diesem nicht gezahnten Bereich befindet.

## Revendications

1. Machine d'emballage continu d'objets dans des sachets plastiques (4) sur une bande (2) convoyeuse horizontale, qui utilise deux mâchoires supérieure (5) et inférieure (6) de scellage par soudure des deux côtés de chaque sachet (4) plastique, où les mâchoires (5,6) respectivement supportées par une plaque porte mâchoire (5a,6a) sont tirées par deux crémaillères (8,9) disposées verticalement et faisant engrenage sur les côtés opposés d'un pignon (10) de traction disposé avec son axe (A) horizontalement, lequel est tourné par un motoréducteur (12) produisant un mouvement vertical (11) de va-et-vient des deux crémaillères (8,9), les mâchoires (5,6) parvenant à une distance maximum (D) entre elles d'ouverture, la machine (1) étant pourvue de moyens (10,12,12',13,14,15) de réglage de la hauteur (H) relative d'une mâchoire (5), pour régler la distance maximum (D) d'ouverture en fonction de l'épaisseur (e) des objets (3) à emballer, **caractérisée en ce que** les deux plaques porte-mâchoires (5a,6a) sont solidaires avec leur crémaillère (8,9), les moyens (10,12,12',13,14,15) pour le réglage de cette hauteur (H) par rapport à une mâchoire (5) comprennent un mécanisme (10b, 13, 15, 17) de désengrènement d'une des deux crémaillères (9) et **en ce que** ce motoréducteur (12,12') est commandé par une unité de contrôle (14) et conçu pour réaliser automatiquement une rotation (17) limitée du pignon (10) déplaçant la crémaillère (8) engrenée de réglage suivant une course (r) verticale égale à la variation de la hauteur (H) de mâchoire (5) désirée.

2. La machine d'emballage de la revendication 1, **caractérisée en ce que** le pignon (10) est monté sur un axe (13) strié moteur sur lequel il peut être déplacé axialement, et **en ce que** le mécanisme (10b,13,15) de désengrènement comprend le pignon avec une partie longitudinale non dentée (10b) et un moteur (15) assemblé au pignon (10) pour son déplacement axial sur l'axe strié (13) jusqu'à situer une crémaillère (6) sur cette partie non dentée.
